(19) Europäisches Patentamt
European Patent Office
Office européen des brevets

(11) **EP 4 769 001 A1**

(12) **EUROPEAN PATENT APPLICATION**

(43) Date of publication:
**01.07.2026 Bulletin 2026/27**

(21) Application number: **25214271.6**

(22) Date of filing: **07.11.2025**

(51) International Patent Classification (IPC):
**G02B 9/62** (2006.01)  **G02B 13/00** (2006.01)
**G02B 13/04** (2006.01)

(52) Cooperative Patent Classification (CPC):
**G02B 13/0045; G02B 9/62; G02B 13/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **25.12.2024 TW 113150755**

(71) Applicants:
• **Eterge Opto-Electronics Co., Ltd.**
**Taichung City 408 (TW)**
• **Zhong Yang Technology Co., Ltd.**
**Taichung City 408 (TW)**

(72) Inventors:
• **HSU, Chih-Cheng**
**408 Taichung City (TW)**
• **KO, Chia-Yi**
**408 Taichung City (TW)**
• **LEE, Tsu-Meng**
**408 Taichung City (TW)**

(74) Representative: **Viering, Jentschura & Partner
mbB**
**Patent- und Rechtsanwälte
Am Brauhaus 8
01099 Dresden (DE)**

(54) **OPTICAL IMAGING LENS, IMAGING DEVICE AND ELECTRONIC DEVICE**

(57) An optical imaging lenses include, from an object side to an image side, a first lens having negative refractive power and including an object-side surface being convex and an image-side surface being concave, a second lens having positive refractive power and including an object-side surface being convex and an image-side surface being convex, an aperture, a third lens having positive refractive power and including an object-side surface being concave and an image-side surface being convex, a forth lens having negative refractive power and including an object-side surface being concave and an image-side surface being concave, a fifth lens having positive refractive power and including an object-side surface being concvex and an image-side surface being convex, and a sixth lens having negative refractive power and including an object-side surface being concvex and an image-side surface being concave. The optical imaging lenses include a total of six lenses.

**EP 4 769 001 A1**

**Description**

BACKGROUND OF INVENTION

1. Field of the Invention

This invention relates to an optical imaging lens and an imaging device, particularly an optical imaging lens suitable for general electronic devices, automotive electronic devices or vehicle recording devices, and an imaging device and electronic device equipped with such an optical imaging lens.

2. Description of the Prior Art

With advancements in semiconductor manufacturing processes, image sensors in photographic devices (e.g., CCD and CMOS Image Sensors) can meet the requirements for miniaturization, facilitating the production of miniaturized cameras. This trend has driven digital electronic products to incorporate miniaturized cameras for imaging functionality. Beyond the trend of miniaturization, photographic devices also need to meet consumer usage requirements for higher resolution, superior lens specifications (e.g., larger aperture ratios, wider field of view), and reduced manufacturing costs.
With the diversified development of electronic imaging devices, their applications have become increasingly broad, including advanced driver-assistance systems (ADAS), dash cameras, home surveillance equipment, smartphones, and human-machine interaction devices. As a result, the design requirements for optical lenses have also become increasingly diverse. For automotive imaging devices, in order to clearly identify obstacles around the vehicle or oncoming vehicles from both sides, it is necessary to enhance the resolution and brightness of optical lenses while ensuring a high level of adaptability to temperature variations of environment. Furthermore, to effectively correct various aberrations, particularly for applications such as distance measurement or object recognition, significant distortion aberrations present in captured images can result in errors during distance calculation or image recognition.
Therefore, designing an optical imaging device that achieves a balance among miniaturization, high resolution, and excellent optical imaging quality has become a primary objective for those skilled in the art.

SUMMARY OF THE INVENTION

In order to address the foregoing issues, the present invention provides an optical imaging lens, which, in order from an object side to an image side, comprises a first lens having negative refractive power with an object-side surface being convex and an image-side surface being concave; a second lens having positive refractive power with an object-side surface being convex and an image-side surface being convex; an aperture stop; a third lens having positive refractive power with an object-side surface being concave and an image-side surface being convex; a fourth lens having negative refractive power with an object-side surface being concave and an image-side surface being concave; a fifth lens having positive refractive power with an object-side surface being convex and an image-side surface being convex; and a sixth lens having negative refractive power with an object-side surface being convex and an image-side surface being concave. A focal length of the fourth lens is f4, a focal length of the fifth lens is f5, a focal length of the sixth lens is f6, a focal length of the optical imaging lens is EFL, and an air gap between the second lens and the third lens is AT23, such that the following conditions are satisfied:

$$-9<(f4+f5+f6)/EFL<-3.4; \text{ and } 0.03<AT23/EFL<0.16.$$

The present invention further provides an optical imaging lens, which, in order from an object side to an image side, comprises a first lens having negative refractive power with an object-side surface being convex and an image-side surface being concave; a second lens having positive refractive power with an object-side surface being convex and an image-side surface being convex; an aperture stop; a third lens having positive refractive power with an object-side surface being concave and an image-side surface being convex; a fourth lens having negative refractive power with an object-side surface being concave and an image-side surface being concave; a fifth lens having positive refractive power with an object-side surface being convex and an image-side surface being convex; and a sixth lens having negative refractive power with an object-side surface being convex and an image-side surface being concave. A focal length of the fourth lens is f4, a focal length of the fifth lens is f5, a focal length of the sixth lens is f6, a focal length of the optical imaging lens is EFL, and an air gap between the third lens and the fourth lens is AT34, such that the following conditions are satisfied:

$$-9<(f4+f5+f6)/EFL<-3.4; \text{ and } 0.007<AT34/EFL<0.03.$$

According to an embodiment of the present invention, a curvature radius of an object-side surface of the fourth lens is R7, and a focal length of the fourth lens is f4, such that the following condition is satisfied:

$$3.3 < R7/f4 < 34.$$

According to an embodiment of the present invention, a curvature radius of an object-side surface of the the fourth lens is R7, a focal length of the optical imaging lens is EFL, and the following condition is satisfied:

$$-35 < R7/EFL < -3.$$

According to an embodiment of the present invention, wherein a thickness of the second lens is CT2, a thickness of the third lens is CT3, an air gap from the second lens to the third lens is AT23, such that the following condition is satisfied:

$$-15.5 < (CT3-CT2)/AT23 < -2.$$

According to an embodiment of the present invention,, wherein a thickness of the third lens is CT3, and a thickness of the fourth lens is CT4, and an air gap from the third lens to the fourth lens is AT34, and the following condition is satisfied:

$$11.0 < (CT3+CT4)/AT34 < 57.0.$$

According to an embodiment of the present invention, wherein a thickness of the first lens is CT1, a thickness of the sixth lens is CT6, and the following condition is satisfied:

$$0.35 < CT1/CT6 < 1.$$

According to an embodiment of the present invention, wherein an air gap between the first lens and the second lens is AT12, and an air gap between the second lens and the third lens is AT23, such that the following condition is satisfied:

$$1.9 < AT12/AT23 < 10.5.$$

According to an embodiment of the present invention, a focal length of the first lens is f1, a focal length of the second lens is f2, and a focal length of the optical imaging lens is EFL, such that the following condition is satisfied:

$$0.15 < (f1+f2)/EFL < 0.7.$$

According to an embodiment of the present invention, wherein a focal length of the fourth lens is f4, a focal length of the fifth lens is f5, and a focal length of the optical imaging lens is EFL, such that the following condition is satisfied:

$$0.07 < (f4+f5)EFL < 0.37.$$

In an embodiment of the present invention, a total track length of the optical imaging lens is TTL, and an air gap between the second lens and the third lens is AT23, such that the following condition is satisfied:

$$25 < TTL/AT23 < 113.$$

In an embodiment of the present invention, a total track length of the optical imaging lens is TTL, and an air gap between the third lens and the fourth lens is AT34, such that the following condition is satisfied:

$$138 < TTL/AT34 < 550.$$

In an embodiment of the present invention, wherein a total track length of the optical imaging lens is TTL, and a thickness of the sixth lens is CT6, such that the following condition is satisfied:

$$11<\text{TTL}/\text{CT6}<24.$$

According to one embodiment of the present invention, wherein a curvature radius of an object-side surface of the the fourth lens is R7, a curvature radius of the image-side of the the fourth lens is R8, a focal length of the fourth lens is f4, and the following condition is satisfied:

$$2<(R7+R8)/f4<34.$$

According to one embodiment of the present invention, wherein a focal length of the first lens is f1, a focal length of the second lens is f2, a thickness of the first lens is CT1, a thickness of the second lens is CT2; the following condition is satisfied:

$$0.16<(f1+f2)/(CT1+CT2)<0.9.$$

According to one embodiment of the present invention, wherein a focal length of the fourth lens is f4, and a focal length of the fifth lens is f5, a thickness of the fourth lens is CT4, and a thickness of the fifth lens is CT5; and the following condition is satisfied:

$$0.1<(f4+f5)/(CT4+CT5)<0.5.$$

According to one embodiment of the present invention, wherein the total thickness of the lenses of the optical imaging lens at the optical axis is ΣCT, and a thickness of the fourth lens is CT4, such that the following condition is satisfied:

$$11<\Sigma\text{CT}/\text{CT4}<26.$$

According to an embodiment of the present invention, wherein the lenses of the optical imaging lens are separated from each other by gaps, and the total width of these gaps at the optical axis is ΣAT, and an air gap between the third lens and the fourth lens is AT34, such that the following condition is satisfied:

$$28<\Sigma\text{AT}/\text{AT34}<125.$$

According to an embodiment of the present invention, wherein a thickness of the fourth lens is CT4, a focal length of the fourth lens is f4, such that the following condition is satisfied:

$$-0.16<\text{CT4}/f4<-0.1.$$

According to an embodiment of the present invention, wherein a thickness of the sixth lens is CT6, a focal length of the sixth lens is f6, such that the following condition is satisfied:

$$-0.06<\text{CT6}/f6<-0.02.$$

The present disclosure further provides an imaging device including the optical imaging lens as mentioned above and an image sensor; wherein the image sensor is located on an image plane of the optical imaging lens.

The present disclosure provides an electronic device including the imaging device as mentioned above.

BRIEF DESCRIPTION OF THE DRAWINGS

FIG. 1A is a schematic view of an optical imaging lens according to a first embodiment of the present invention;
FIG. 1B, from left to right, shows the astigmatism/field curvature curves, the distortion curves, and the longitudinal spherical aberration curves of the optical imaging lens according to the first embodiment of the present invention;
FIG. 2A is a schematic view of an optical imaging lens according to a second embodiment of the present invention;
FIG. 2B, from left to right, shows the astigmatism/field curvature curves, the distortion curves and the longitudinal spherical aberration curves of the optical imaging lens according to the second embodiment of the present invention;

FIG. 3A is a schematic view of an optical imaging lens according to a third embodiment of the present invention;
FIG. 3B, from left to right, shows the astigmatism/field curvature curves, the distortion curves and the longitudinal spherical aberration curves of the optical imaging lens according to the third embodiment of the present invention;
FIG. 4A is a schematic view of an optical imaging lens according to a fourth embodiment of the present invention;
FIG. 4B, from left to right, shows the astigmatism/field curvature curves, the distortion curves and the longitudinal spherical aberration curves of the optical imaging lens according to the fourth embodiment of the present invention;
FIG. 5A is a schematic view of an optical imaging lens according to a fifth embodiment of the present invention;
FIG. 5B, from left to right, shows the astigmatism/field curvature curves, the distortion curves and the longitudinal spherical aberration curves of the optical imaging lens according to the fifth embodiment of the present invention;
FIG. 6 is a schematic view of an automotive electronic device according to a sixth embodiment of the present invention;
FIG. 7 is a schematic view of a general electronic device according to a seventh embodiment of the present invention;

## DETAILED DESCRIPTION OF THE INVENTION

In the following embodiments, the lenses of any optical imaging lens may be made of glass or plastic, without being limited to the materials specified in the embodiments. When the lens material is glass, the lens surface can be processed by grinding or molding. Additionally, glass material is resistant to temperature variations and with robust hardness, which can reduce the impact of environmental changes on the optical imaging lens and thereby extend its lifespan. When the lens material is plastic, it helps reduce the weight of the optical imaging lens and lower production costs.

In the embodiments of the present invention, each lens includes an object-side surface, facing the imaged object, and an image-side surface, facing the image plane. The surface shape of each lens is defined based on the shape of the surface near to the optical axis (paraxial region). For example, if the object-side surface of a lens is described as convex, it means that the object-side surface of the lens near to the optical axis is convex, although the surface in the off-axis region may be either convex or concave. The paraxial region shape of the each lens is determined by whether the curvature radius of the surface is positive or negative. For instance, if the curvature radius of the object-side surface of a lens is positive, the object-side surface is convex, while if the curvature radius of the object-side surface of a lens is negative, the object-side surface is concave; if the curvature radius of the image-side surface of a lens is positive, the image-side surface is concave, while if the curvature radius of the image-side surface of a lens is negative, the image-side surface is convex.

In the embodiments of the present invention, the object-side surface and the image-side surface of each lens can be spherical or aspherical. Using aspherical surfaces on lenses helps correct aberrations of the optical imaging lens, such as spherical aberration, and reduces the number of lenses used. However, incorporating aspherical lenses increases the overall cost of the optical imaging lens. In the embodiments of the present invention, the surfaces of some lenses are spherical but can be modified to aspherical as needed; similarly, the surfaces of some lenses are aspherical but it can be modified to spherical as needed.

In the embodiments of the present invention, the total track length (TTL) of the optical imaging lens is defined as the distance from the object-side surface of the first lens of the optical imaging lens to the image plane on the optical axis. The imaging height of the optical imaging lens, also called the maximum image height (ImgH). While an image sensor is installed on the image plane, ImgH represents half the diagonal length of the effective sensing area of the image sensor. In the following embodiments, the TTL, ImgH, focal length, curvature radius of lenses, thickness of lenses, and the distances among each lens are measured in mm.

An optical imaging lens of the present invention, in order from an object side to an image side, comprises a first lens, a second lens, an aperture stop, a third lens, a fourth lens, a fifth lens and a sixth lens.

The first lens has a negative refractive power. Its object-side surface is convex while its image-side surface is concave. Preferably, the first lens is made of glass, which allows the optical imaging lens to operate reliably under conditions with relatively large temperature variations. In the embodiment of the present invention, the object-side surface or/and image-side surface of the first lens can be spherical to lower production cost and facilitate processing.

The second lens has a positive refractive power. Its object-side surface can be convex, and its image-side surface is convex. Preferably, the material of the second lens can be plastic to lower production cost and facilitate processing. In the embodiments of the present invention, the object-side surface or/and image-side surface of the second lens can be aspherical, which can help to improve spherical aberration.

The third lens may have a positive refractive power. Its object-side surface is concave, while the image-side surface is convex. Preferably, the material of the third lens can be plastic to lower production cost and facilitate processing. In the embodiment of the present invention, the object-side surface and/or the image-side surface of the third lens can be aspherical, which can help to improve spherical aberration.

The fourth lens may have negative refractive power. Its object-side surface may be concave, and the image-side surface may also be concave. Preferably, the material of the fourth lens can be plastic to reduce manufacturing costs and facilitate processing. In the embodiment of the present invention, the object-side surface and/or the image-side surface of the fourth lens can be aspherical, which can help to improve spherical aberration.

The fifth lens has a positive refractive power. Its object-side surface can be convex, and the image-side surface may also be convex. Preferably, the material of the fifth lens can be glass to adapt to environments with relatively large temperature variations. In the embodiment of the present invention, the object-side surface or/and image-side surface of the fifth lens can be aspherical, which can help to improve spherical aberration.

The sixth lens has a negative refractive power. Its object-side surface can be convex, while the image-side surface may be concave. Preferably, the material of the sixth lens can be glass to adapt to environments with relatively large temperature variations. In the embodiment of the present invention, the object-side surface or/and image-side surface of the sixth lens can be aspherical, which can help to improve spherical aberration.

The focal length of the fourth lens in the optical imaging lens is f4, the focal length of the fifth lens in the optical imaging lens is f5, the focal length of the sixth lens in the optical imaging lens is f6, and the focal length of the optical imaging lens is EFL, and the following condition is satisfied:

$$9 < (f4+f5+f6)/EFL < -3.4. \quad (1)$$

When condition (1) is satisfied, the fourth lens, the fifth lens and the sixth lens work in conjunction to adjust the volume distribution, thereby reducing spherical aberration and other aberrations caused by a single lens.

An air gap between the second lens and the third lens of the optical imaging lens is AT23, and the focal length of the optical imaging lens is EFL, and the following condition is satisfied:

$$0.03 < AT23/EFL < 0.16. \quad (2)$$

When condition (2) is satisfied, the positions of the lenses are adjusted, thereby helping to balance the volume distribution of the optical imaging lens.

An air gap between the third lens and the fourth lens of the optical imaging lens is AT34, and the focal length of the optical imaging lens is EFL, and the following condition is satisfied:

$$0.007 < AT34/EFL < 0.03. \quad (3)$$

When condition (3) is satisfied, the positions of the lenses are adjusted, thereby helping to balance the volume distribution of the imaging system.

A curvature radius of the object-side surface of the fourth lens of the optical imaging lens is R7, and a focal length of the fourth lens is f4, and the following condition is satisfied:

$$3.3 < R7/f4 < 34. \quad (4)$$

When condition (4) is satisfied, the surface shape and refractive power of the fourth lens are adjusted, thereby helping to reduce the overall volume and balance the volume distribution between the object-side and image-side ends.

A curvature radius of the object-side surface of the fourth lens of the optical imaging lens is R7, and the focal length of the optical imaging lens is EFL, and the following condition is satisfied:

$$-35 < R7/EFL < -3. \quad (5)$$

When condition (5) is satisfied, the configuration of the convex and concave surfaces of the fourth lens is facilitated, thereby correcting the Petzval sum and making the image plane flatter.

The thickness of the second lens in the optical imaging lens is CT2, the thickness of the third lens is CT3, and the air gap from the second lens to the third lens is AT23, and the following condition is satisfied:

$$-15.5 < (CT3-CT2)/AT23 < -2. \quad (6)$$

When condition (6) is satisfied, the second lens and the third lens work in conjunction to help reduce the volume at the object-side end of the image capture system and increase the field of view.

The thickness of the second lens in the optical imaging lens is CT2, the thickness of the third lens is CT3, and the air gap from the second lens to the third lens is AT23, and the following condition is satisfied:

$$11.0<(CT3+CT4)/AT34<57.0. \quad (7)$$

When condition (7) is satisfied, the third lens and the fourth lens work in conjunction to help reduce the volume at the object-side end of the image capture system and increase the field of view.

The thickness of the first lens in the optical imaging lens is CT1, the thickness of the sixth lens is CT6, and the following condition is satisfied:

$$0.35<CT1/CT6<1. \quad (8)$$

When condition (8) is satisfied, the first lens and the sixth lens work in conjunction to help reduce the volume at the object-side end of the image capture system and increase the field of view.

An air gap between the first lens and the second lens of the optical imaging lens is AT12, the air gap between the second lens and the third lens of the optical imaging lens is AT23, and the following condition is satisfied:

$$1.9<AT12/AT23<10.5. \quad (9)$$

When condition (9) is satisfied, the ratio of the lens spacing between the first and second lenses to the lens spacing between the second and third lenses is adjusted, which helps improve the resolution of both the central field of view and the peripheral field of view.

A focal length of the first lens of the optical imaging lens is f1, a focal length of the second lens is f2, and a focal length of the optical imaging lens is EFL, and the following condition is satisfied:

$$0.15<(f1+f2)/EFL<0.7. \quad (10)$$

When condition (10) is satisfied, the first lens and the second lens work in conjunction to adjust the volume distribution, thereby reducing spherical aberration and other aberrations caused by a single lens.

A focal length of the fourth lens of the optical imaging lens is f4, a focal length of the fifth lens is f5, and a focal length of the optical imaging lens is EFL, and the following condition is satisfied:

$$0.07<(f4+f5)EFL<0.37. \quad (11)$$

When condition (11) is satisfied, the fourth lens and the fifth lens work in conjunction to adjust the volume distribution, thereby reducing spherical aberration and other aberrations caused by a single lens.

The total track length of the optical imaging lens is TTL, the air gap between the second lens and the third lens of the optical imaging lens is AT23, and the following condition is satisfied:

$$25<TTL/AT23<113. \quad (12)$$

When condition (12) is satisfied, the spatial configuration between the second lens and the third lens is balanced while miniaturization is achieved, thereby reducing the sensitivity of the imaging lens assembly and the impact of assembly tolerances.

The total track length of the optical imaging lens is TTL, the air gap between the third lens and the fourth lens of the optical imaging lens is AT34, and the following condition is satisfied:

$$138<TTL/AT34<550. \quad (13)$$

When condition (13) is satisfied, the spatial configuration between the third lens and the fourth lens is balanced while miniaturization is achieved, thereby reducing the sensitivity of the imaging lens assembly and the impact of assembly tolerances.

The total track length of the optical imaging lens is TTL, a thickness of the sixth lens is CT6, andt the following condition is satisfied:

$$11<TTL/CT6<24. \quad (14)$$

When condition (14) is satisfied, appropriate control of the relationship between the central thickness of the third lens and the total track length facilitates correction of aberrations in the on-axis field of view and enhances the imaging quality of the optical lens.

A curvature radius of the object-side surface of the fourth lens of the optical imaging lens is R7, and a curvature radius of the image-side surface of the fourth lens is R8, and a focal length of the fourth lens is f4, and the following condition is satisfied:

$$2<(R7+R8)/f4<34.\quad(15)$$

When condition (15) is satisfied, the surface shape and refractive power of the fourth lens are adjusted to correct aberrations.

A focal length of the first lens of the optical imaging lens is f1, a focal length of the second lens is f2, the thickness of the first lens is CT1, and the thickness of the second lens is CT2, and the following condition is satisfied:

$$0.16<(f1+f2)/(CT1+CT2)<0.9.\quad(16)$$

When condition (16) is satisfied, variations in spherical aberration and chromatic aberration of the optical system are effectively controlled, thereby making it easier to correct spherical aberration and chromatic aberration in the optical system.

A focal length of the fourth lens of the optical imaging lens is f4, a focal length of the fifth lens is f5, the thickness of the fourth lens is CT4, and the thickness of the fifth lens is CT5, and the following condition is satisfied:

$$0.1<(f4+f5)/(CT4+CT5)<0.5.\quad(17)$$

When condition (17) is satisfied, variations in spherical aberration and chromatic aberration of the optical system are effectively controlled, thereby making it easier to correct spherical aberration and chromatic aberration in the optical system.

A thickness of the third lens of the optical imaging lens is CT3, the thickness of the fourth lens is CT4, the air gap between the third lens and the fourth lens of the optical imaging lens is AT34, and the following condition is satisfied:

$$11<\Sigma CT/CT4<26.\quad(18)$$

When condition (18) is satisfied, the fourth lens has sufficient thickness to help correct higher-order aberrations generated in a wide-angle photographic lens system, and the positions of the lenses can be adjusted to reduce the overall volume.

In the optical imaging lens assembly, the lenses of the optical imaging lens are separated from each other by gaps, and the total width of these gaps at the optical axis is ΣAT, and an air gap between the third lens and the fourth lens is AT34, and the following condition is satisfied:

$$28<\Sigma AT/AT34<125.\quad(19)$$

When condition (19) is satisfied, the lens positions within the optical imaging lens assembly are evenly distributed, which helps balance the center of gravity of the optical imaging lens assembly.

A thickness of the fourth lens of the optical imaging lens is CT4, the focal length of the fourth lens is f4, and the following condition is satisfied:

$$-0.16<CT4/f4<-0.1.\quad(20)$$

When condition (20) is satisfied, the thickness of the fourth lens is adjusted to facilitate the miniaturization of the electronic device.

A thickness of the sixth lens of the optical imaging lens is CT6, the focal length of the sixth lens is f6, and the following condition is satisfied:

$$-0.06<CT6/f6<-0.02.\quad(21)$$

When condition (21) is satisfied, the thickness of the sixth lens is adjusted to facilitate the miniaturization of the electronic device.

First Embodiment

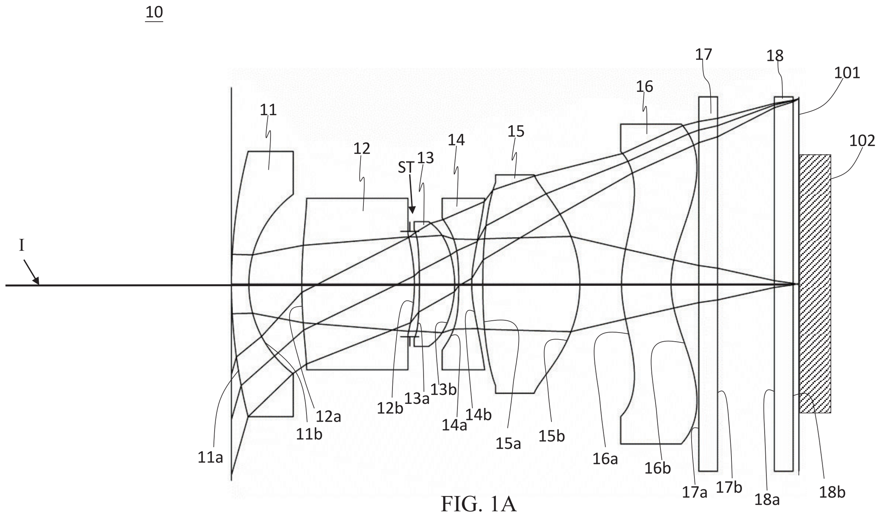

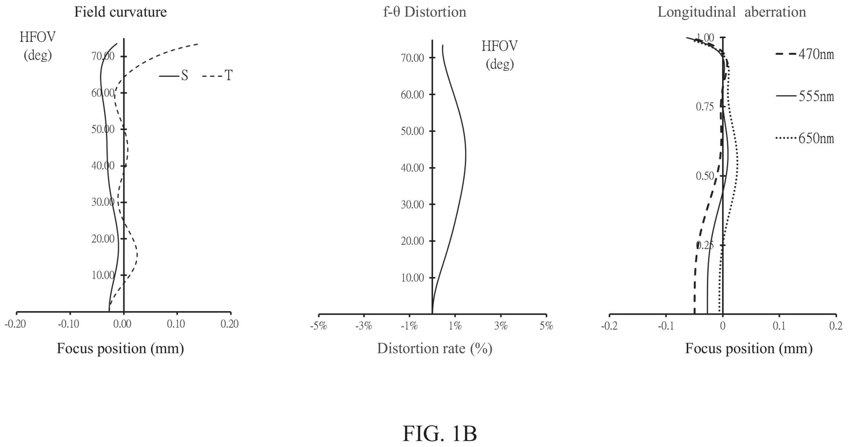

FIG. 1A is a schematic view of an optical imaging lens of a first embodiment according to the present invention. FIG. 1B, from left to right, shows the astigmatism/field curvature curves, f-tanθ distortion curves, f-θ distortion curves and the longitudinal spherical aberration of the optical imaging lens according to the first embodiment.

As shown in FIG. 1A, the optical imaging lens 10 of the first embodiment includes, in order from an object side to an image side, a first lens 11, a second lens 12, an aperture stop

ST, a third lens 13, a fourth lens 14, and a fifth lens and a sixth lens. The optical imaging lens 10 may further include a filter unit 17, a protective glass 18 and an image plane 101. An image sensor 102 could be disposed on the image plane 101 of the optical imaging lens 10 to form an imaging device (not labeled).

The first lens 11 has negative refractive power. Its object-side surface 11a is convex while its image-side surface 11b is concave. Both of the object-side surface 11a and the image-side surface 11b are spherical. The material of the first lens 11 includes glass, but is not limited thereto.

The second lens 12 has positive refractive power. Its object-side surface 12a is concave and its image-side surface 12b is also convex. Both of the object-side surface 12a and the image-side surface 12b are aspheric. The material of second lens 12 includes plastic, but is not limited thereto.

The third lens 13 has positive refractive power. Its object-side surface 13a is concave and its image-side surface 13b is convex. Both of the object-side surface 13a and the image-side surface 13b are aspheric. The material of third lens 13 includes plastic, but is not limited thereto.

The fourth lens 14 has negative refractive power. Its object-side surface 14a is concave and its image-side surface 14b is also concave. Both of the object-side surface 14a and the image-side surface 14b are aspheric. The material of the fourth lens 14 includes plastic, but is not limited thereto.

The fifth lens 15 has positive refractive power. Its object-side surface 15a is convex and its image-side surface 15b is also convex. Both of the object-side surface 15a and the image-side surface 15b are aspheric. The material of the fifth lens 15 includes gless, but is not limited thereto.

The sixth lens 16 has negative refractive power. Its object-side surface 16a is convex while its image-side surface 16b is concave. Both of the object-side surface 16a and the image-side surface 16b are aspheric. The material of the sixth lens 16 includes plastic, but is not limited thereto.

The filter unit 17 is positioned between the sixth lens 16 and the image plane 101 to filter out light of specific wavelength, allowing the desired wavelengths to pass through. For example, it can be a component for filtering ultraviolet or far-infrared light. Both surfaces 17a and 17b of the filter unit 17 are flat, and the material is glass.

The protective glass 18 is positioned between the filter unit 17 and the image plane 101 to protect the image plane 101. Both surfaces 18a and 18b of the protective glass 18 are flat, and the material is glass.

The image sensor 102 can be a CCD image sensor or CMOS image sensor.

Referring to Table 1, which provides the optical parameters of the optical imaging lens 10 of the first embodiment. In Table 1, the object-side surface 11a of the first lens 11 is denoted as surface 11a, the image-side surface 11b is denoted as surface 11b, and so on. The value in the distance column denotes a distance from a lens surface to a next lens surface on the optical axis I. For example, the distance from the object-side surface 11a to the image-side surface 11b is 0.461 mm, which means that a thickness of the first lens 11 is 0.461 mm. Similarly, the distance AT12 from the image-side surface 11b of the first lens 11 to the object-side surface 12a of the second lens 12 is 1.401 mm, and so on. In the first embodiment, the effective focal length of the optical imaging lens 10 is EFL, the maximum half field of view of the optical imaging lens 10 is HFOV. The values of HFOV of the optical imaging lens 10 are listed in Table 1.

TABLE 1

| First Embodiment | | | | | | | |
|---|---|---|---|---|---|---|---|
| TTL=15.02mm, EFL=3.67mm, FNO=2.4, HFOV=73.5° | | | | | | | |
| | Surface | Surface type | Curvature Radius (mm) | Distance (mm) | Refractive Index | Abbe Number | focal length (mm) |
| Object | | Flat | Infinity | | | | |
| 1st lens | 11a | Spherical Surface | 13.297 | 0.461 | 1.804 | 46.6 | -4.57 |
| | 11b | Spherical Surface | 2.841 | 1.401 | | | |

(continued)

| First Embodiment | | | | | | | |
|---|---|---|---|---|---|---|---|
| TTL=15.02mm, EFL=3.67mm, FNO=2.4, HFOV=73.5° | | | | | | | |
| | Surface | Surface type | Curvature Radius (mm) | Distance (mm) | Refractive Index | Abbe Number | focal length (mm) |
| Object | | Flat | Infinity | | | | |
| 2nd lens | 12a | Aspherical Surface | 12.196 | 2.983 | 1.661 | 20.4 | 5.14 |
| | 12b | Aspherical Surface | -4.299 | -0.127 | | | |
| Aperture Stop | ST | Flat | Infinity | 0.261 | | | |
| 3rd lens | 13a | Aspherical Surface | -12.145 | 0.932 | 1.537 | 56.0 | 5.65 |
| | 13b | Aspherical Surface | -2.500 | 0.108 | | | |
| 4th lens | 14a | Aspherical Surface | -11.311 | 0.342 | 1.661 | 20.4 | -3.41 |
| | 14b | Aspherical Surface | 2.886 | 0.294 | | | |
| 5th lens | 15a | Aspherical Surface | 19.871 | 2.571 | 1.625 | 58.2 | 4.77 |
| | 15b | Aspherical Surface | -3.339 | 1.102 | | | |
| 6th lens | 16a | Aspherical Surface | 3.338 | 1.311 | 1.537 | 56.0 | -34.10 |
| | 16b | Aspherical Surface | 2.436 | 0.684 | | | |
| Filter Unit | 17a | Flat | Infinity | 0.500 | 1.523 | 54.5 | inf |
| | 17b | Flat | Infinity | 1.550 | | | |
| CG | 18a | Flat | Infinity | 0.500 | 1.523 | 54.5 | inf |
| | 18b | Flat | Infinity | 0.150 | | | |
| Image Plane | 101 | Flat | Infinity | 0.000 | | | |
| Reference Wavelength:550nm | | | | | | | |

Table 2 below lists the values of the aspherical surface coefficients of each lens surface in the first embodiment used, wherein K is the conic coefficient of the aspherical curve equation, and A4 to A16 are the 4nd order to the 16th order aspheric coefficients. For example, the conic coefficient K of the object-side surface 12a of the second lens 12 is - 0.900, and so on. In the following description, the tables for each of the optical imaging lenses of other embodiments use the same definition as the first embodiment. Therefore, the duplicated description would be omitted for brevity.

TABLE 2

| | 12a | 12b | 13a | 13b | 14a | 14b | 15a | 15b | 16a | 16b |
|---|---|---|---|---|---|---|---|---|---|---|
| First Embodiment_Aspherical Surface Coefficient | | | | | | | | | | |
| K | -9.00E+01 | -1.35E+01 | 2.89E+01 | 5.29E+00 | 2.16E+00 | 1.39E+01 | 5.39E+01 | 1.56E+00 | 6.48E+00 | 3.06E+00 |
| A4 | 3.77E-03 | -5.90E-03 | 9.60E-03 | -1.15E-02 | -5.03E-02 | -5.33E-03 | 8.00E-03 | -9.47E-03 | -6.80E-03 | -9.49E-03 |
| A6 | -1.33E-03 | 2.96E-03 | -3.88E-03 | -1.66E-02 | 1.21E-02 | 2.76E-04 | -2.33E-03 | 1.51E-03 | -3.91E-04 | 4.65E-04 |
| A8 | 1.92E-04 | -2.79E-03 | -3.01E-03 | 3.76E-03 | -7.22E-03 | 3.28E-05 | 3.51E-04 | -2.15E-04 | 7.77E-05 | -1.65E-05 |
| A10 | -1.74E-05 | 8.44E-04 | -5.36E-04 | -1.05E-03 | 1.59E-03 | -2.72E-06 | -2.20E-05 | 1.79E-05 | -4.19E-06 | 1.12E-07 |
| A12 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 |
| A14 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 |
| A16 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 |

In the first embodiment, the focal length of the fourth lens in the optical imaging lens is f4, the focal length of the fifth lens is f5, the focal length of the sixth lens is f6, and the focal length of the optical imaging lens is EFL, (f4+f5+f6)/EFL = -8.922.

In the first embodiment, an air gap from the second lens to the third lens is AT23, and the focal length of the optical imaging lens is EFL, AT23/EFL = 0.037.

In the first embodiment, an air gap from the third lens to the fourth lens is AT34, and the focal length of the optical imaging lens is EFL, AT34/EFL = 0.03.

In the first embodiment, the curvature radius of the object-side surface of the the fourth lens in the optical imaging lens is R7, and the focal length of the the fourth lens is f4, R7/f4 = 3.313.

In the first embodiment, the curvature radius of the object-side surface of the the fourth lens in the optical imaging lens is R7, and the focal length of the optical imaging lens is EFL, R7/EFL = -3.082.

In the first embodiment, the thickness of the second lens in the optical imaging lens is CT2, the thickness of the third lens is CT3, the air gap from the second lens to the third lens is AT23, (CT3-CT2)/AT23 = -15.309.

In the first embodiment, the thickness of the third lens in the optical imaging lens is CT3, the thickness of the fourth lens is CT4, the air gap from the third lens to the fourth lens is AT34, (CT3+CT4)/AT34= 11.762.

In the first embodiment, the thickness of the first lens in the optical imaging lens is CT1, the thickness of the sixth lens is CT6, CT1/CT6 = 0.352.

In the first embodiment, the air gap from the first lens to the second lens is AT12, the air gap from the second lens to the third lens is AT23, AT12/AT23 = 10.455.

In the first embodiment, the focal length of the first lens in the optical imaging lens is f1, the focal length of the second lens is f2, and the focal length of the optical imaging lens is EFL, (f1+f2)/EFL = 0.156.

In the first embodiment, the focal length of the fourth lens in the optical imaging lens is f4, the focal length of the fifth lens is f5, and the focal length of the optical imaging lens is EFL, (f4+f5)EFL =0.369.

In the first embodiment, the total track length of the optical imaging lens is TTL, the air gap from the second lens to the third lens is AT23, TTL/AT23 = 112.107.

In the first embodiment, the total track length of the optical imaging lens is TTL, the air gap from the third lens to the fourth lens is AT34, TTL/AT34 = 138.697.

In the first embodiment, the total track length of the optical imaging lens is TTL, the thickness of the sixth lens is CT6, TTL/CT6 = 11.456.

In the first embodiment, the curvature radius of the object-side surface of the the fourth lens in the optical imaging lens is R7, and the curvature radius of the image-side of the the fourth lens is R8, the focal length of the fourth lens is f4, (R7+R8)/f4 = 2.468.

In the first embodiment, the focal length of the first lens is f1, the focal length of the second lens is f2, the thickness of the first lens is CT1, and the thickness of the second lens is CT2, (f1+f2)/(CT1+CT2) = 0.166.

In the first embodiment, the focal length of the fourth lens is f4, the focal length of the fifth lens is f5, the thickness of the fourth lens is CT4, and the thickness of the fifth lens is CT5, (f4+f5)/(CT4+CT5) = 0.465.

In the first embodiment, the total thickness of the lenses of the optical imaging lens at the optical axis is ΣCT, a thickness of the fourth lens is CT4, ΣCT/CT4 = 25.174

In the first embodiment, the lenses of the optical imaging lens are separated from each other by gaps, and the total width of these gaps at the optical axis is ΣAT, the air gap from the third lens to the fourth lens is AT34, ΣAT/AT34 = 28.060.

In the first embodiment, the thickness of the fourth lens is CT4, the focal length of the fourth lens is f4, CT4/f4 = -0.100.

In the first embodiment, the thickness of the sixth lens is CT6, the focal length of the sixth lens is f6, CT6/f6 = -0.038.

From the values of the above conditions, it can be seen that the optical imaging lens assembly 10 of the first embodiment satisfies the requirements of conditions (1) to (21).

FIG. 1B shows, from left to right, the astigmatism/field curvature curves, f-θ distortion curves and the longitudinal spherical aberration curves of the optical imaging lens 10. It can be seen from the astigmatism/field curvature curve (wavelength 550 nm), the aberration in the sagittal direction (S) varies between -0.01 and 0.02 mm across the entire field of view, while the aberration in the tangential direction (T) varies between -0.04 and -0.01 mm. From the f-θ distortion curve (wavelength 550 nm), it is evident that the absolute value of the f-θ distortion rate of the optical imaging lens 10 is less than 2%. From the longitudinal spherical aberration curve, it can be seen that off-axis light rays at three infrared wavelengths-470 nm, 555 nm, and 650 nm-can all converge near the imaging point. The deviation of the imaging point can be controlled within the range of -0.06 to 0.03 mm. As shown in FIG. 1B, the optical imaging lens 10 of this embodiment has effectively corrected various aberrations, meeting the imaging quality requirements of the optical system.

Second Embodiment

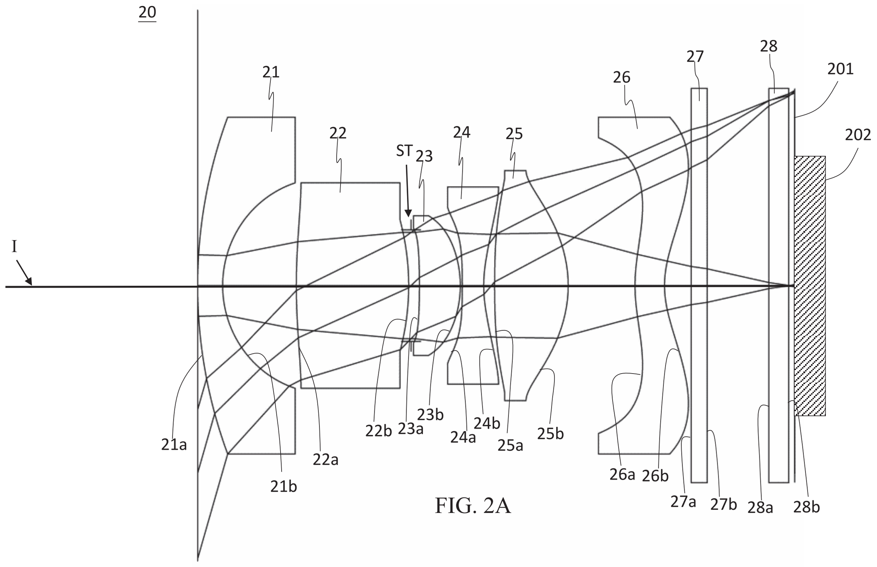

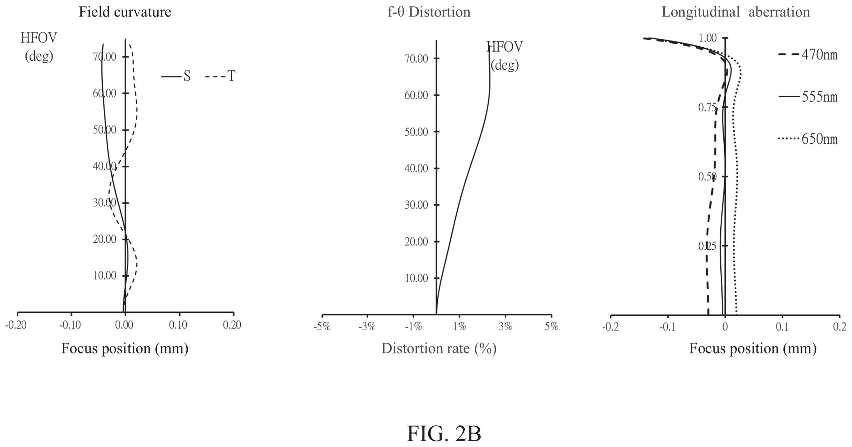

Referring to FIGS. 2A and 2B, FIG. 2A is a schematic view of an optical imaging lens of a second embodiment according to the present invention. FIG. 2B, from left to right, shows the astigmatism/field curvature curves, f-θ distortion curves, and the longitudinal spherical aberration curves of the optical imaging lens according to the second embodiment.

As shown in FIG. 2A, the optical imaging lens 20 of the second embodiment includes, in order from an object side to an image side, a first lens 21, a second lens 22, an aperture stop ST, a third lens 23 and a fourth lens 24, a fifth lens 25 and a sixth lens 26. The optical imaging lens 20 may further include a filter unit 27, a protective glass 28 and an image plane 201. An image sensor 202 can be disposed on the image plane 201 of the optical imaging lens 20 to form an imaging device (not labeled).

The first lens 21 has negative refractive power. Its object-side surface 21a is convex while its image-side surface 21b is concave. Both of the object-side surface 21a and the image-side surface 21b are spherical. The material of the first lens 21 includes glass, but is not limited thereto.

The second lens 22 has positive refractive power. Its object-side surface 22a is convex, and its image-side surface 22b is also convex. Both of the object-side surface 22a and the image-side surface 22b are aspheric. The material of second lens 22 includes plastic, but is not limited thereto.

The third lens 23 has positive refractive power. Its object-side surface 23a is concave and its image-side surface 23b is convex. Both of the object-side surface 23a and the image-side surface 23b are aspheric. The material of third lens 23 includes plastic, but is not limited thereto.

The fourth lens 24 has negative refractive power. Its object-side surface 24a is concave and its image-side surface 24b is also concave. Both of the object-side surface 24a and the image-side surface 24b are aspheric. The material of the fourth lens 24 includes plastic, but is not limited thereto.

The fifth lens 25 has positive refractive power. Its object-side surface 25a is convex and its image-side surface 25b is also convex. Both of the object-side surface 25a and the image-side surface 25b are aspheric. The material of fifth lens 25 includes glass, but is not limited thereto.

The sixth lens 26 has negative refractive power. Its object-side surface 26a is convex and its image-side surface 26b is concave. Both of the object-side surface 26a and the image-side surface 26b are aspheric. The material of the sixth lens 26 includes plastic, but is not limited thereto.

The filter unit 27 is positioned between the sixth lens 26 and the image plane 201 to filter out light of specific wavelength, allowing the desired wavelengths to pass through. For example, it can be a component for filtering ultraviolet or far-infrared light. Both surfaces 27a and 27b of the filter unit 27 are flat, and the material is glass.

The protective glass 28 is positioned between the filter unit 27 and the image plane 201 to protect the image plane 201. Both surfaces 28a and 28b of the protective glass 28 are flat, and the material is glass.

The image sensor 202 can be a CCD image sensor or CMOS image sensor.

The detailed optical data and aspherical coefficients of the lens surfaces for the optical imaging lens 20 in the second embodiment are listed in Table 3 and Table 4, respectively. In the second embodiment, the aspherical surface equation is expressed in the same form as in the first embodiment.

TABLE 3

| Second Embodiment | | | | | | |
|---|---|---|---|---|---|---|
| TTL=15mm, EFL=3.6mm, FNO=2.3, HFOV=73.5° | | | | | | |
| | Surface | Surface type | Curvature Radius (mm) | Distance (mm) | Refractive Index | Abbe Number | focal length (mm) |
| Object | | Flat | Infinity | | | | |
| 1st lens | 21a | Spherical Surface | 11.506 | 0.629 | 1.804 | 46.6 | -4.36 |
| | 21b | Spherical Surface | 2.627 | 1.850 | | | |
| 2nd lens | 22a | Aspherical Surface | 13.970 | 2.825 | 1.661 | 20.4 | 6.54 |
| | 22b | Aspherical Surface | -5.825 | 0.061 | | | |
| Aperture Stop | ST | Flat | Infinity | 0.209 | | | |
| 3rd lens | 23a | Aspherical Surface | -17.870 | 1.026 | 1.537 | 56.0 | 5.42 |
| | 22b | Aspherical Surface | -2.559 | 0.049 | | | |

(continued)

| | Surface | Surface type | Curvature Radius (mm) | Distance (mm) | Refractive Index | Abbe Number | focal length (mm) |
|---|---|---|---|---|---|---|---|
| | | | Second Embodiment | | | | |
| | | | TTL=15mm, EFL=3.6mm, FNO=2.3, HFOV=73.5° | | | | |
| Object | | Flat | Infinity | | | | |
| 4th lens | 24a | Aspherical Surface | -34.472 | 0.538 | 1.661 | 20.4 | -4.24 |
| | 24b | Aspherical Surface | 3.102 | 0.274 | | | |
| 5th lens | 25a | Aspherical Surface | 27.715 | 1.849 | 1.625 | 58.2 | 4.50 |
| | 25b | Aspherical Surface | -3.060 | 1.677 | | | |
| 6th lens | 26a | Aspherical Surface | 3.898 | 0.741 | 1.537 | 56.0 | -12.78 |
| | 26b | Aspherical Surface | 2.323 | 0.672 | | | |
| Filter Unit | 27a | Flat | Infinity | 0.400 | 1.523 | 54.5 | inf |
| | 27b | Flat | Infinity | 1.550 | | | |
| CG | 28a | Flat | Infinity | 0.500 | 1.523 | 54.5 | inf |
| | 28b | Flat | Infinity | 0.150 | | | |
| Image Plane | 201 | Flat | Infinity | 0.000 | | | |
| Reference Wavelength:550nm | | | | | | | |

TABLE 4

| | 22a | 22b | 23a | 23b | 24a | 24b | 25a | 25b | 26a | 26b |
|---|---|---|---|---|---|---|---|---|---|---|
| Second Embodiment _Aspherical Surface Coefficient | | | | | | | | | | |
| K | -5.39E+01 | -1.48E+01 | 7.96E+01 | -2.62E+00 | -3.39E+00 | -1.31E+01 | -3.46E+01 | -1.96E+00 | -1.32E+01 | -4.56E+00 |
| A4 | -4.22E-04 | -7.16E-03 | -4.89E-03 | -1.02E-02 | -4.62E-02 | -2.62E-03 | 6.86E-03 | -5.24E-03 | -1.02E-02 | -8.98E-03 |
| A6 | -1.32E-04 | 8.22E-04 | -5.16E-03 | -8.96E-03 | 1.25E-02 | 1.09E-04 | -8.05E-04 | 6.03E-04 | 2.04E-04 | 5.95E-04 |
| A8 | -3.01E-06 | -2.88E-04 | 7.58E-04 | 2.00E-03 | -4.28E-03 | -8.02E-06 | 2.76E-05 | -1.00E-04 | 2.88E-05 | -3.10E-05 |
| A10 | 2.15E-07 | 6.87E-05 | -1.34E-03 | -7.27E-04 | 6.98E-04 | -4.73E-06 | -2.41E-07 | 1.49E-05 | -3.35E-06 | 5.24E-07 |
| A12 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 |
| A14 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 |
| A16 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 |

In the second embodiment, the values of various conditions for the optical imaging lens 20 are listed in Table 5. From Table 5, it can be seen that the optical imaging lens 20 of the second embodiment satisfies the requirements of conditions (1) to (21).

TABLE 5

| Second Embodiment | | |
|---|---|---|
| No. | Condition | value |
| 1 | (f4+f5+f6)/EFL | -3.477 |
| 2 | AT23/EFL | 0.075 |
| 3 | AT34/EFL | 0.014 |
| 4 | R7/f4 | 8.126 |
| 5 | R7/EFL | -9.575 |
| 6 | (CT3-CT2)/AT23 | -6.663 |
| 7 | (CT3+CT4)/AT34 | 31.874 |
| 8 | CT1/CT6 | 0.849 |
| 9 | AT12/AT23 | 6.853 |
| 10 | (f1+f2)/EFL | 0.606 |
| 11 | (f4+f5)EFL | 0.073 |
| 12 | TTL/AT23 | 55.573 |
| 13 | TTL/AT34 | 305.607 |
| 14 | TTL/CT6 | 20.235 |
| 15 | (R7+R8)/f4 | 7.395 |
| 16 | (f1+f2)/(CT1+CT2) | 0.631 |
| 17 | (f4+f5)/(CT4+CT5) | 0.109 |
| 18 | ΣCT/CT4 | 14.144 |
| 19 | ΣAT/AT34 | 83.946 |
| 20 | CT4/f4 | -0.127 |
| 21 | CT6/f6 | -0.058 |

FIG. 2B shows, from left to right, the astigmatism/field curvature curves, f-θ distortion curves and the longitudinal spherical aberration curves of the optical imaging lens 20. It can be seen from the astigmatism/field curvature curve (wavelength 550 nm), the aberration in the sagittal direction (S) varies between -0.04 to 0.004 mm across the entire field of view, while the aberration in the tangential direction (T) varies between -0.04 to 0.03 mm. From the f-θ distortion curve (wavelength 550 nm), it can be observed that the absolute value of the f-θ distortion rate of the optical imaging lens 20 is less than 3%. From the longitudinal spherical aberration curve, it can be seen that off-axis light rays at three infrared wavelengths-470 nm, 555 nm, and 650 nm-can all converge near the imaging point. The deviation of the imaging point can be controlled within the range of -0.14 to 0.07 mm. As shown in FIG. 2B, the optical imaging lens 20 of this embodiment has effectively corrected various aberrations, meeting the imaging quality requirements of the optical system.

Third Embodiment

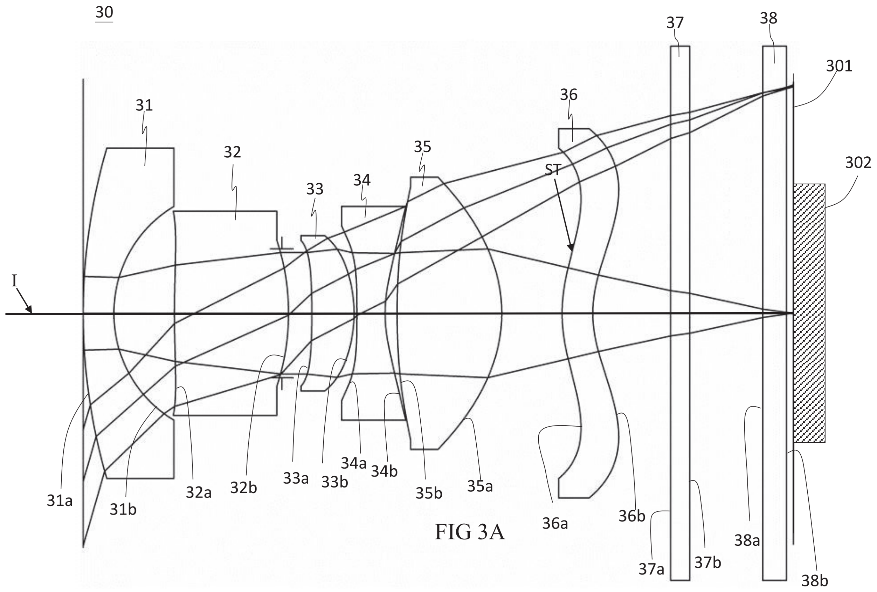

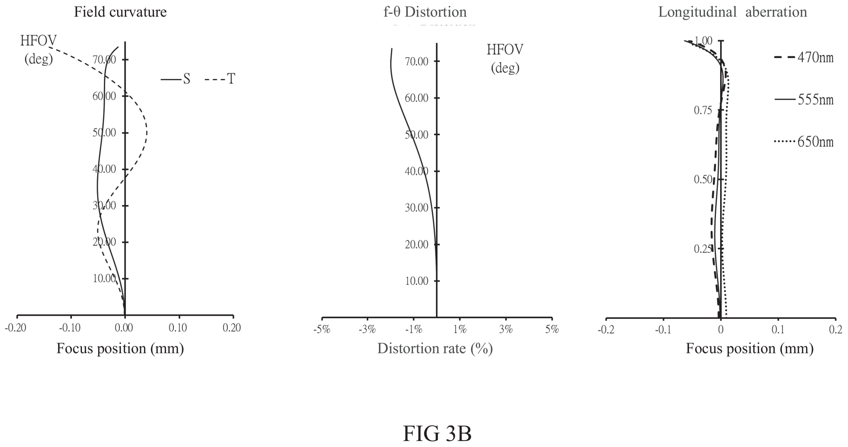

Referring to FIGS. 3A and 3B, FIG. 3A is a schematic view of an optical imaging lens of a third embodiment according to the present invention. FIG. 3B, from left to right, shows the astigmatism/field curvature curves, f-θ distortion curves and the longitudinal spherical aberration curves of the optical imaging lens according to the third embodiment.

As shown in FIG. 3A, the optical imaging lens 30 of the third embodiment includes, in order from an object side to an image side, a first lens 31, a second lens 32, an aperture stop ST, a third lens 33 and a fourth lens 34, a fifth lens 35 and a sixth lens 36. The optical imaging lens 30 may further include a filter unit 37, a protective glass 38 and an image plane 301. An image sensor 302 can be disposed on the image plane 301 of the optical imaging lens 30 to form an imaging device (not labeled).

The first lens 31 has negative refractive power. Its object-side surface 31a is convex while its image-side surface 31b is concave. Both of the object-side surface 31a and the image-side surface 31b are spherical. The material of the first lens 31 includes glass, but is not limited thereto.

The second lens 32 has positive refractive power. Its object-side surface 32a is convex and its image-side surface 32b is also convex. Both of the object-side surface 32a and the image-side surface 32b are aspheric. The material of second lens 32 includes plastic, but is not limited thereto.

The third lens 33 has positive refractive power. Its object-side surface 33a is concave and its image-side surface 33b is convex. Both of the object-side surface 33a and the image-side surface 33b are aspheric. The material of third lens 33 includes plastic, but is not limited thereto.

The fourth lens 34 has negative refractive power. Its object-side surface 34a is concave, and its image-side surface 34b is concave. Both of the object-side surface 34a and the image-side surface 34b are aspheric. The material of the fourth lens 34 includes plastic, but is not limited thereto.

The fifth lens 35 has positive refractive power. Its object-side surface 35a is convex and its image-side surface 35b is also convex. Both of the object-side surface 35a and the image-side surface 35b are aspheric. The material of fifth lens 35 includes glass, but is not limited thereto.

The sixth lens 36 has negative refractive power. Its object-side surface 36a is convex, and its image-side surface 36b is concave. Both of the object-side surface 36a and the image-side surface 36b are aspheric. The material of the sixth lens 36 includes plastic, but is not limited thereto.

The filter unit 37 is positioned between the sixth lens 36 and the image plane 301 to filter out light of specific wavelength, allowing the desired wavelengths to pass through. For example, it can be a component for filtering ultraviolet or far-infrared light. Both surfaces 37a and 37b of the filter unit 37 are flat, and the material is glass.

The protective glass 38 is positioned between the filter unit 37 and the image plane 301 to protect the image plane 301. Both surfaces 38a and 38b of the protective glass 38 are flat, and the material is glass.

The image sensor 302 can be a CCD image sensor or CMOS image sensor.

The detailed optical data and aspherical coefficients of the lens surfaces for the optical imaging lens 30 in the third embodiment are listed in Table 6 and Table 7, respectively. In the third embodiment, the aspherical surface equation is expressed in the same form as in the first embodiment.

Table 6

| Third Embodiment | | | | | | | |
|---|---|---|---|---|---|---|---|
| TTL=15.03mm, EFL=3.72mm, FNO=2.4,HFOV=73.5° | | | | | | | |
| | Surface | Surface type | Curvature Radius (mm) | Distance (mm) | Refractive Index | Abbe Number | focal length (mm) |
| Object | | Flat | Infinity | | | | |
| 1st lens | 31a | Spherical Surface | 11.822 | 0.649 | 1.804 | 46.6 | -3.98 |
| | 31b | Spherical Surface | 2.538 | 1.284 | | | |
| 2nd lens | 32a | Aspherical Surface | 21.578 | 2.414 | 1.661 | 20.4 | 6.15 |
| | 32b | Aspherical Surface | -4.836 | -0.157 | | | |
| Aperture Stop | ST | Flat | Infinity | 0.654 | | | |
| 3rd lens | 33a | Aspherical Surface | -12.917 | 0.893 | 1.537 | 56.0 | 5.68 |
| | 33b | Aspherical Surface | -2.533 | 0.056 | | | |
| 4th lens | 34a | Aspherical Surface | -125.849 | 0.596 | 1.661 | 20.4 | -3.71 |
| | 34b | Aspherical Surface | 2.531 | 0.256 | | | |
| 5th lens | 35a | Aspherical Surface | 17.161 | 2.217 | 1.625 | 58.2 | 4.21 |
| | 35b | Aspherical Surface | -2.963 | 1.273 | | | |
| 6th lens | 36a | Aspherical Surface | 2.993 | 0.651 | 1.537 | 56.0 | -29.72 |
| | 36b | Aspherical Surface | 2.330 | 1.651 | | | |

(continued)

| Third Embodiment | | | | | | | |
|---|---|---|---|---|---|---|---|
| TTL=15.03mm, EFL=3.72mm, FNO=2.4,HFOV=73.5° | | | | | | | |
| | Surface | Surface type | Curvature Radius (mm) | Distance (mm) | Refractive Index | Abbe Number | focal length (mm) |
| Object | | Flat | Infinity | | | | |
| Filter Unit | 37a | Flat | Infinity | 0.400 | 1.523 | 54.5 | inf |
| | 37b | Flat | Infinity | 1.550 | | | |
| CG | 38a | Flat | Infinity | 0.500 | 1.523 | 54.5 | inf |
| | 38b | Flat | Infinity | 0.150 | | | |
| Image Plane | 301 | Flat | Infinity | 0.000 | | | |
| Reference Wavelength:550nm | | | | | | | |

Table 7

| | 32a | 32b | 33a | 33b | 34a | 34b | 35a | 35b | 36a | 36b |
|---|---|---|---|---|---|---|---|---|---|---|
| K | -3.52E+01 | -1.26E+01 | 7.03E+01 | -7.86E+00 | -9.07E+01 | -1.13E+01 | -9.01E-01 | -2.24E+00 | 3-61E+00 | -2.99E+00 |
| A4 | -4.51E-03 | -1.45E-02 | 1.49E-03 | -2.05E-02 | -4.40E-02 | -3.81E-03 | 6.41E-03 | -5.75E-03 | -1.12E-02 | -1.41E-02 |
| A6 | -2.96E-05 | 1.85E-03 | -4.15E-03 | -9.31E-03 | 8.06E-03 | 4.02E-04 | -1.18E-03 | 3.10E-04 | 1.61E-04 | 8.35E-04 |
| A8 | -3.39E-05 | -5.80E-04 | -1.23E-03 | 1.71E-03 | -3.28E-03 | 1.00E-05 | 8.76E-05 | -5.34E-05 | 3.20E-05 | -4.08E-05 |
| A10 | -1.04E-05 | 1.51E-04 | -2.96E-04 | -5.94E-04 | 6.69E-04 | -1.45E-06 | -1.60E-06 | 7.58E-06 | -3.59E-06 | 5.27E-07 |
| A12 | 0.00E+00 | 0.00E+00 | 0.00E+00 | 0.00E+00 | 0.00E+00 | -1.92E-08 | -3.94E-07 | 1.45E-10 | -9.34E-10 | -9.34E-10 |
| A14 | 0.00E+00 | 0.00E+00 | 0.00E+00 | 0.00E+00 | 0.00E+00 | 0.00E+00 | 0.00E+00 | 3.35E-09 | 2.76E-10 | 2.76E-10 |
| A16 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 |

Third Embodiment_Aspherical Surface Coefficient

In the third embodiment, the values of various conditions for the optical imaging lens 30 are listed in Table 8. From Table 8, it can be seen that the optical imaging lens 30 of the third embodiment satisfies the requirements of conditions (1) to (21).

Table 8

| No. | Condition | Value |
|---|---|---|
| \multicolumn{3}{} Third Embodiment |||
| 1 | (f4+f5+f6)/EFL | -7.855 |
| 2 | AT23/EFL | 0.133 |
| 3 | AT34/EFL | 0.015 |
| 4 | R7/f4 | 33.894 |
| 5 | R7/EFL | -33.830 |
| 6 | (CT3-CT2)/AT23 | -3.062 |
| 7 | (CT3+CT4)/AT34 | 26.384 |
| 8 | CT1/CT6 | 0.997 |
| 9 | AT12/AT23 | 2.586 |
| 10 | (f1+2)/EFL | 0.582 |
| 11 | (f4+f5)EFL | 0.134 |
| 12 | TTL/AT23 | 30.273 |
| 13 | TTL/AT34 | 266.249 |
| 14 | TTL/CT6 | 23.095 |
| 15 | (R7+R8)/f4 | 33.212 |
| 16 | (f1+f2)/(CT1+CT2) | 0.707 |
| 17 | (f4+f5)/(CT4+CT5) | 0.177 |
| 18 | ΣCT/CT4 | 12.452 |
| 19 | ΣAT/AT34 | 59.614 |
| 20 | CT4/f4 | -0.160 |
| 21 | CT6/f6 | -0.022 |

FIG. 3B shows, from left to right, the astigmatism/field curvature curves, f-θ distortion curves and the longitudinal spherical aberration curves of the optical imaging lens 30. It can be seen from the astigmatism/field curvature curve (wavelength 550 nm), the aberration in the sagittal direction (S) varies between -0.06 to 0.00 mm across the entire field of view, while the aberration in the tangential direction (T) varies between -0.15 to 0.04 mm. From the f-θ distortion curve (wavelength 550 nm), it can be observed that the absolute value of the f-θ distortion rate of the optical imaging lens 30 is less than 2%. From the longitudinal spherical aberration curve, it can be seen that off-axis light rays at three infrared wavelengths-470 nm, 555 nm, and 650 nm-can all converge near the imaging point. The deviation of the imaging point can be controlled within the range of -0.07 to 0.02 mm. As shown in FIG. 3B, the optical imaging lens 30 of this embodiment has effectively corrected various aberrations, meeting the imaging quality requirements of the optical system.

Fourth Embodiment

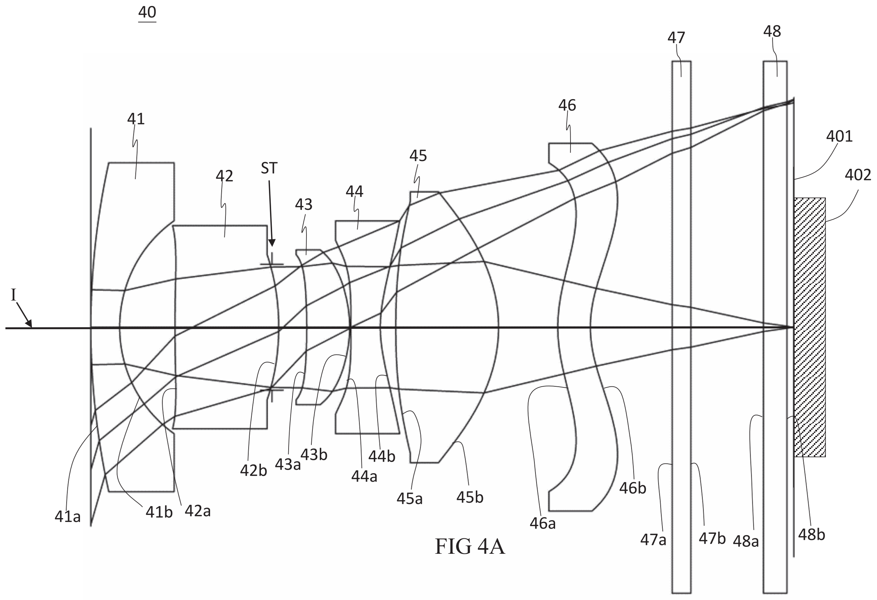

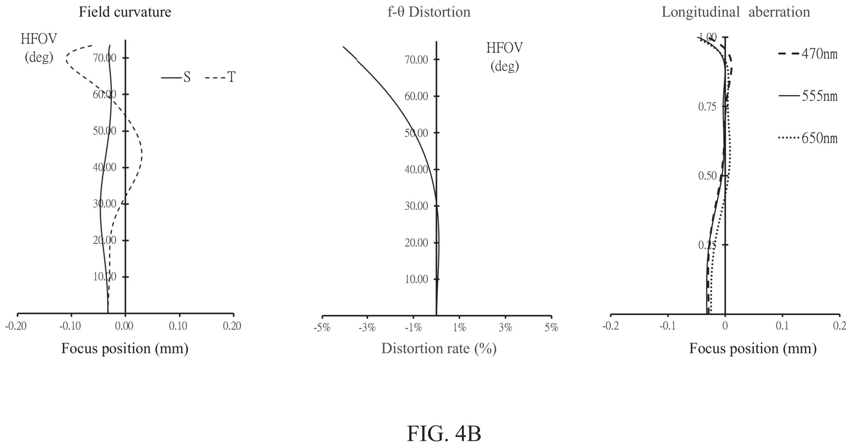

Referring to FIGS. 4A and 4B, FIG. 4A is a schematic view of an optical imaging lens of a fourth embodiment according to the present invention. FIG. 4B, from left to right, shows the astigmatism/field curvature curves, f-θ distortion curves and the longitudinal spherical aberration curves of the optical imaging lens according to the fourth embodiment.

As shown in FIG. 4A, the optical imaging lens 40 of the fourth embodiment includes, in order from an object side to an image side, a first lens 41, a second lens 42, an aperture stop ST, a third lens 43 and a fourth lens 44, a fifth lens 45 and a sixth lens 46. The optical imaging lens 40 may further include a filter unit 47, a protective glass 48 and an image plane 401. An image sensor 402 can be disposed on the image plane 401 of the optical imaging lens 40 to form an imaging device (not labeled).

The first lens 41 has negative refractive power. Its object-side surface 41a is convex while its image-side surface 41b is concave. Both of the object-side surface 41a and the image-side surface 41b are spherical. The material of the first lens 41 includes glass, but is not limited thereto.

The second lens 42 has positive refractive power. Its object-side surface 42a is convex and its image-side surface 42b is also convex. Both of the object-side surface 42a and the image-side surface 42b are aspheric. The material of second lens 42 includes plastic, but is not limited thereto.

The third lens 43 has positive refractive power. Its object-side surface 43a is concave and its image-side surface 43b is convex. Both of the object-side surface 43a and the image-side surface 43b are aspheric. The material of third lens 43 includes plastic, but is not limited thereto.

The fourth lens 44 has negative refractive power. Its object-side surface 44a is concave and its image-side surface 44b is also concave. Both of the object-side surface 44a and the image-side surface 44b are aspheric. The material of the fourth lens 44 includes plastic, but is not limited thereto.

The fifth lens 45 has positive refractive power. Its object-side surface 45a is convex and its image-side surface 45b is also convex. Both of the object-side surface 45a and the image-side surface 45b are aspheric. The material of fifth lens 45 includes glass, but is not limited thereto.

The sixth lens 46 has negative refractive power. Its object-side surface 46a is convex and its image-side surface 46b is concave. Both of the object-side surface 46a and the image-side surface 46b are aspheric. The material of the sixth lens 46 includes plastic, but is not limited thereto.

The filter unit 47 is positioned between the sixth lens 46 and the image plane 401 to filter out light of specific wavelength, allowing the desired wavelengths to pass through. For example, it can be a component for filtering ultraviolet or far-infrared light. Both surfaces 47a and 47b of the filter unit 47 are flat, and the material is glass.

The protective glass 48 is positioned between the filter unit 47 and the image plane 401 to protect the image plane 401. Both surfaces 48a and 48b of the protective glass 48 are flat, and the material is glass.

The image sensor 402 can be a CCD image sensor or CMOS image sensor.

The detailed optical data and aspherical coefficients of the lens surfaces for the optical imaging lens 40 in the fourth embodiment are listed in Table 9 and Table 10, respectively. In the fourth embodiment, the aspherical surface equation is expressed in the same form as in the first embodiment.

TABLE 9

| Fourth Embodiment | | | | | | | |
|---|---|---|---|---|---|---|---|
| TTL=15mm,EFL=3.81mm,FNO=2.4,HFOV=73.5° | | | | | | | |
| | Surface | Surface type | Curvature Radius (mm) | Distance (mm) | Refractive Index | Abbe Number | focal length (mm) |
| Object | | Flat | Infinity | | | | |
| 1st lens | 41a | Spherical Surface | 15.273 | 0.616 | 1.834 | 42.7 | -3.94 |
| | 41b | Spherical Surface | 2.665 | 1.179 | | | |
| 2nd lens | 42a | Aspherical Surface | 23.334 | 2.216 | 1.661 | 20.4 | 6.26 |
| | 42b | Aspherical Surface | -4.893 | -0.150 | | | |
| Aperture Stop | ST | Flat | Infinity | 0.748 | | | |
| 3rd lens | 43a | Aspherical Surface | -13.008 | 0.917 | 1.537 | 56.0 | 5.48 |
| | 43b | Aspherical Surface | -2.463 | 0.027 | | | |
| 4th lens | 44a | Aspherical Surface | -113.136 | 0.625 | 1.661 | 20.4 | -3.73 |
| | 44b | Aspherical Surface | 2.549 | 0.331 | | | |
| 5th lens | 45a | Aspherical Surface | 16.625 | 2.196 | 1.625 | 58.2 | 4.24 |
| | 45b | Aspherical Surface | -2.979 | 1.262 | | | |
| 6th lens | 46a | Aspherical Surface | 3.074 | 0.695 | 1.537 | 56.0 | -28.35 |
| | 46b | Aspherical Surface | 2.357 | 1.746 | | | |

(continued)

| Fourth Embodiment | | | | | | | |
|---|---|---|---|---|---|---|---|
| TTL=15mm,EFL=3.81mm,FNO=2.4,HFOV=73.5° | | | | | | | |
| | Surface | Surface type | Curvature Radius (mm) | Distance (mm) | Refractive Index | Abbe Number | focal length (mm) |
| Object | | Flat | Infinity | | | | |
| Filter Unit | 47a | Flat | Infinity | 0.400 | 1.523 | 54.5 | inf |
| | 47b | Flat | Infinity | 1.550 | | | |
| CG | 48a | Flat | Infinity | 0.500 | 1.523 | 54.5 | inf |
| | 48b | Flat | Infinity | 0.150 | | | |
| Image Plane | 401 | Flat | Infinity | 0.000 | | | |
| Reference Wavelength:550nm | | | | | | | |

TABLE 10

| | 42a | 42b | 43a | 43b | 44a | 44b | 45a | 45b | 46a | 46b |
|---|---|---|---|---|---|---|---|---|---|---|
| Fourth Embodiment _Aspherical Surface Coefficient | | | | | | | | | | |
| | 42a | 42b | 43a | 43b | 44a | 44b | 45a | 45b | 46a | 46b |
| K | -1.76E+01 | -1.23E+01 | 6.97E+01 | -7.57E+00 | -1.15E+02 | -1.12E+01 | 1.09E+00 | -2.22E+00 | -3.67E+00 | -2.83E+00 |
| A4 | -4.98E-03 | -1.47E-02 | 1.52E-03 | -2.04E-02 | -4.36E-02 | -4.49E-03 | 6.74E-03 | -5.87E-03 | -1.09E-02 | -1.38E-02 |
| A6 | -1.36E-04 | 1.95E-03 | -4.49E-03 | -9.11E-03 | 7.76E-03 | 3.40E-04 | -1.15E-03 | 3.51E-04 | 1.24E-04 | 8.57E-04 |
| A8 | -3.69E-05 | -6.76E-04 | -5.44E-04 | 1.77E-03 | -3.35E-03 | -3.91E-06 | 8.97E-05 | -3.75E-05 | 3.27E-05 | -4.07E-05 |
| A10 | -1.14E-05 | 1.75E-04 | -5.14E-04 | -5.93E-04 | 6.94E-04 | 4.74E-07 | -2.64E-06 | 7.15E-06 | -3.36E-06 | 4.92E-07 |
| A12 | 0.00E+00 | 0.00E+00 | 0.00E+00 | 0.00E+00 | 0.00E+00 | 1.97E-08 | -3.61E-07 | 9.22E-09 | -7.48E-09 | -7.48E-09 |
| A14 | 0.00E+00 | 0.00E+00 | 0.00E+00 | 0.00E+00 | 0.00E+00 | 0.00E+00 | 0.00E+00 | -2.42E-09 | 4.54E-10 | 4.54E-10 |
| A16 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 |

In the fourth embodiment, the values of various conditions for the optical imaging lens 40 are listed in Table 11. From Table 11, it can be seen that the optical imaging lens 40 of the fourth embodiment satisfies the requirements of conditions (1) to (21).

Table 11

| | Fourth Embodiment | |
|---|---|---|
| No. | Condition | Value |
| 1 | (f4+f5+f6)/EFL | -7.306 |
| 2 | AT23/EFL | 0.157 |
| 3 | AT34/EFL | 0.007 |
| 4 | R7/f4 | 30.340 |
| 5 | R7/EFL | -29.695 |
| 6 | (CT3-CT2)/AT23 | -2.175 |
| 7 | (CT3+CT4)/AT34 | 56.424 |
| 8 | CT1/CT6 | 0.886 |
| 9 | AT12/AT23 | 1.973 |
| 10 | (f1+f2)/EFL | 0.609 |
| 11 | (f4+f5)EFL | 0.134 |
| 12 | TTL/AT23 | 25.101 |
| 13 | TTL/AT34 | 549.045 |
| 14 | TTL/CT6 | 21.574 |
| 15 | (R7+R8)/f4 | 29.656 |
| 16 | (f1+f2)/(CT1+CT2) | 0.820 |
| 17 | (f4+f5)/(CT4+CT5) | 0.182 |
| 18 | ΣCT/CT4 | 11.625 |
| 19 | ΣAT/AT34 | 124.320 |
| 20 | CT4/f4 | -0.168 |
| 21 | CT6/f6 | -0.025 |

FIG. 4B shows, from left to right, the astigmatism/field curvature curves, f-θ distortion curves and the longitudinal spherical aberration curves of the optical imaging lens 40. It can be seen from the astigmatism/field curvature curve (wavelength 550 nm), the aberration in the sagittal direction (S) varies between -0.05 to -0.02 mm across the entire field of view, while the aberration in the tangential direction (T) remains within +0.01. From the f-θ distortion curve (wavelength 5500 nm), it can be observed that the absolute value of the f-θ distortion rate of the optical imaging lens 40 is less than 5%. From the longitudinal spherical aberration curve, it can be seen that off-axis light rays at three infrared wavelengths-470 nm, 555 nm, and 650 nm-can all converge near the imaging point. The deviation of the imaging point can be controlled within the range of -0.05 to 0.02 mm. As shown in FIG. 4B, the optical imaging lens 40 of this embodiment has effectively corrected various aberrations, meeting the imaging quality requirements of the optical system.

Fifth Embodiment

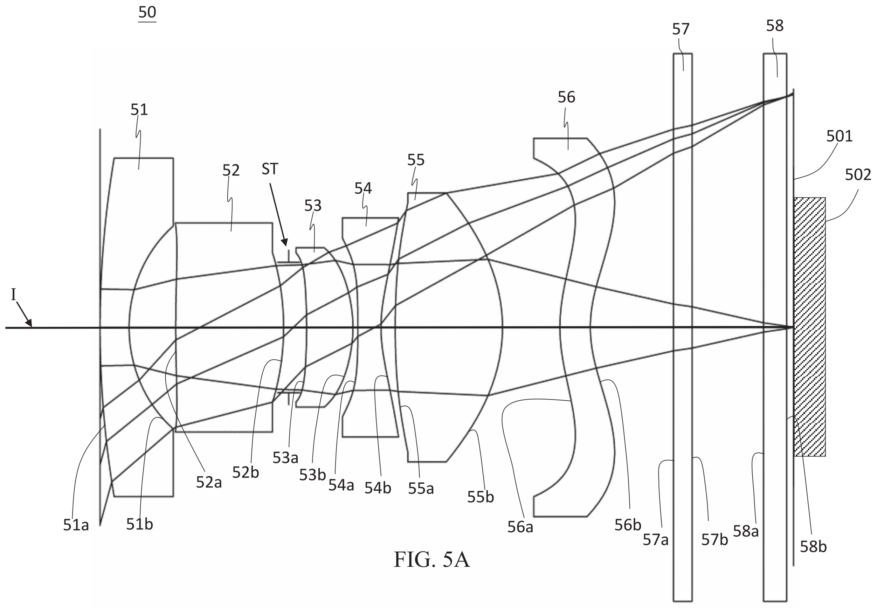

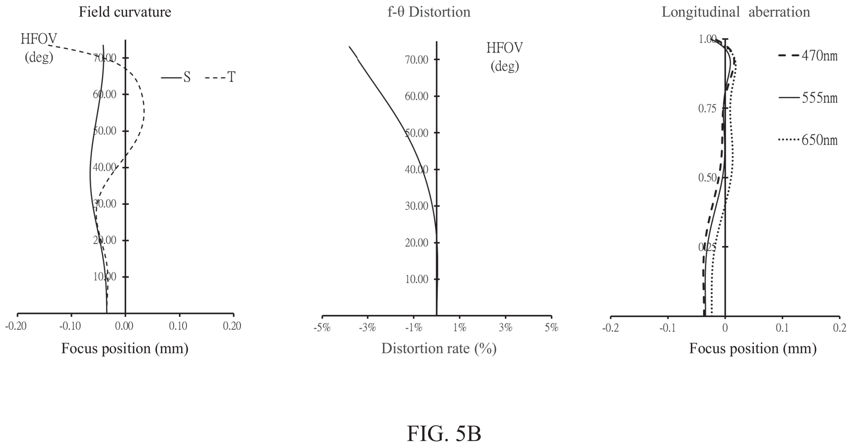

Referring to FIGS. 5A and 5B, FIG. 5A is a schematic view of an optical imaging lens of a fifth embodiment according to the present invention. FIG. 5B, from left to right, shows the astigmatism/field curvature curves, f-θ distortion curves and the longitudinal spherical aberration curves of the optical imaging lens according to the fifth embodiment.

As shown in FIG. 5A, the optical imaging lens 50 of the fifth embodiment includes, in order from an object side to an image side, a first lens 51, a second lens 52, an aperture stop ST, a third lens 53 and a fourth lens 54, a fifth lens 55 and a sixth lens 56. The optical imaging lens 50 may further include a filter unit 57, a protective glass 58 and an image plane 501. An image sensor 502 can be disposed on the image plane 501 of the optical imaging lens 50 to form an imaging device (not labeled).

The first lens 51 has negative refractive power. Its object-side surface 51a is convex while its image-side surface 51b is concave. Both of the object-side surface 51a and the image-side surface 51b are spherical. The material of the first lens 51 includes glass, but is not limited thereto.

The second lens 52 has positive refractive power. Its object-side surface 52a is convex and its image-side surface 52b is also convex. Both of the object-side surface 52a and the image-side surface 52b are aspheric. The material of second lens 52 includes plastic, but is not limited thereto.

The third lens 53 has positive refractive power. Its object-side surface 53a is concave and its image-side surface 53b is convex. Both of the object-side surface 53a and the image-side surface 53b are aspheric. The material of third lens 53 includes plastic, but is not limited thereto.

The fourth lens 54 has negative refractive power. Its object-side surface 54a is concave and its image-side surface 54b is also concave. Both of the object-side surface 54a and the image-side surface 54b are aspheric. The material of the fourth lens 54 includes plastic, but is not limited thereto.

The fifth lens 55 has positive refractive power. Its object-side surface 55a is convex and its image-side surface 55b is also convex. Both of the object-side surface 55a and the image-side surface 55b are aspheric. The material of fifth lens 55 includes glass, but is not limited thereto.

The sixth lens 56 has negative refractive power. Its object-side surface 56a is convex and its image-side surface 56b is also concave. Both of the object-side surface 56a and the image-side surface 56b are aspheric. The material of the sixth lens 56 includes plastic, but is not limited thereto.

The filter unit 57 is positioned between the sixth lens 56 and the image plane 501 to filter out light of specific wavelength, allowing the desired wavelengths to pass through. For example, it can be a component for filtering ultraviolet or far-infrared light. Both surfaces 57a and 57b of the filter unit 57 are flat, and the material is glass.

The protective glass 58 is positioned between the filter unit 57 and the image plane 501 to protect the image plane 501. Both surfaces 58a and 58b of the protective glass 58 are flat, and the material is glass.

The image sensor 502 can be a CCD image sensor or CMOS image sensor.

The detailed optical data and aspherical coefficients of the lens surfaces for the optical imaging lens 50 in the fifth embodiment are listed in Table 12 and Table 13, respectively. In the fifth embodiment, the aspherical surface equation is expressed in the same form as in the first embodiment.

Table 12

| Fifth Embodiment | | | | | | | |
|---|---|---|---|---|---|---|---|
| TTL=15.03mm,EFL=3.78mm,FNO=2.4,HFOV=73.5° | | | | | | | |
| | Surface | Surface type | Curvature Radius (mm) | Distance (mm) | Refractive Index | Abbe Number | focal length (mm) |
| Object | | Flat | Infinity | | | | |
| 1st lens | 51a | Spherical Surface | 19.041 | 0.629 | 1.834 | 42.7 | -3.73 |
| | 51b | Spherical Surface | 2.646 | 1.010 | | | |
| 2nd lens | 52a | Aspherical Surface | 22.642 | 2.340 | 1.661 | 20.4 | 6.17 |
| | 52b | Aspherical Surface | -4.824 | 0.114 | | | |
| Aperture Stop | ST | Flat | Infinity | 0.384 | | | |
| 3rd lens | 53a | Aspherical Surface | -13.074 | 1.005 | 1.537 | 56.0 | 5.45 |
| | 53b | Aspherical Surface | -2.462 | 0.104 | | | |
| 4th lens | 54a | Aspherical Surface | -130.336 | 0.502 | 1.661 | 20.4 | -3.89 |
| | 54b | Aspherical Surface | 2.655 | 0.310 | | | |
| 5th lens | 55a | Aspherical Surface | 17.193 | 2.326 | 1.625 | 58.2 | 4.28 |
| | 55b | Aspherical Surface | -2.992 | 1.243 | | | |
| 6th lens | 56a | Aspherical Surface | 3.128 | 0.660 | 1.537 | 56.0 | -25.53 |
| | 56b | Aspherical Surface | 2.360 | 1.805 | | | |

(continued)

| Fifth Embodiment | | | | | | | |
|---|---|---|---|---|---|---|---|
| TTL=15.03mm,EFL=3.78mm,FNO=2.4,HFOV=73.5° | | | | | | | |
| | Surface | Surface type | Curvature Radius (mm) | Distance (mm) | Refractive Index | Abbe Number | focal length (mm) |
| Filter Unit | 57a | Flat | Infinity | 0.400 | 1.523 | 54.5 | inf |
| | 57b | Flat | Infinity | 1.550 | | | |
| CG | 58a | Flat | Infinity | 0.500 | 1.523 | 54.5 | inf |
| | 58b | Flat | Infinity | 0.150 | | | |
| Image Plane | 501 | Flat | Infinity | 0.000 | | | |
| Reference Wavelength:550nm | | | | | | | |

Table 13

Fifth Embodiment _ Aspherical Surface Coefficient

| | 52a | 52b | 53a | 53b | 54a | 54b | 55a | 55b | 56a | 56b |
|---|---|---|---|---|---|---|---|---|---|---|
| K | 1.98E+01 | -1.43E+01 | 7.26E+01 | 7.35E+00 | 1.11E+02 | 1.22E+01 | 8.09E-01 | 2.23E+00 | 4.29E+00 | 3.11E+00 |
| A4 | -4.55E-03 | -1.40E-02 | 1.51E-03 | -2.01E-02 | -4.25E-02 | -5.29E-03 | 6.76E-03 | -5.85E-03 | -1.16E-02 | -1.42E-02 |
| A6 | 4.79E-05 | 2.18E-03 | -3.92E-03 | -8.62E-03 | 7.91E-03 | 3.17E-04 | -1.17E-03 | 3.28E-04 | 9.23E-05 | 8.50E-04 |
| A8 | -1.18E-05 | -5.62E-04 | -2.46E-04 | 1.93E-03 | -3.44E-03 | 3.67E-06 | 8.53E-05 | -3.94E-05 | 2.92E-05 | -4.15E-05 |
| A10 | -1.29E-05 | 6.75E-05 | -7.38E-04 | -6.53E-04 | 6.55E-04 | 1.83E-06 | -2.70E-06 | 7.06E-06 | -3.45E-06 | 4.49E-07 |
| A12 | 0.00E+00 | 0.00E+00 | 0.00E+00 | 0.00E+00 | 0.00E+00 | 1.13E-07 | -4.05E-07 | 2.05E-09 | -5.94E-09 | -5.94E-09 |
| A14 | 0.00E+00 | 0.00E+00 | 0.00E+00 | 0.00E+00 | 0.00E+00 | 0.00E+00 | 0.00E+00 | -4.49E-09 | 1.36E-09 | 1.36E-09 |
| A16 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 |

In the fifth embodiment, the values of various conditions for the optical imaging lens 50 are listed in Table 14. From Table 14, it can be seen that the optical imaging lens 50 of the third embodiment satisfies the requirements of conditions (1) to (21).

Table 14

| Fifth Embodiment | | |
|---|---|---|
| No. | Condition | Value |
| 1 | (f4+f5+f6)/EFL | -6.651 |
| 2 | AT23/EFL | 0.132 |
| 3 | AT34/EFL | 0.028 |
| 4 | R7/f4 | 33.471 |
| 5 | R7/EFL | -34.480 |
| 6 | (CT3-CT2)/AT23 | -2.679 |
| 7 | (CT3+CT4)/AT34 | 14.481 |
| 8 | CT1/CT6 | 0.954 |
| 9 | AT12/AT23 | 2.026 |
| 10 | (f1+f2)/EFL | 0.646 |
| 11 | (f4+f5)EFL | 0.103 |
| 12 | TTL/AT23 | 30.158 |
| 13 | TTL/AT34 | 144.411 |
| 14 | TTL/CT6 | 22.780 |
| 15 | (R7+R8)/f4 | 32.789 |
| 16 | (f1+f2)/(CT1+CT2) | 0.822 |
| 17 | (f4+f5)/(CT4+CT5) | 0.138 |
| 18 | ΣCT/CT4 | 14.861 |
| 19 | ΣAT/AT34 | 30.410 |
| 20 | CT4/f4 | -0.129 |
| 21 | CT6/f6 | -0.026 |

FIG. 5B shows, from left to right, the astigmatism/field curvature curves, f-0 distortion curves and the longitudinal spherical aberration curves of the optical imaging lens 50. It can be seen from the astigmatism/field curvature curve (wavelength 550 nm), the aberration in the sagittal direction (S) remains within -0.07 to -0.03 mm across the entire field of view, while the aberration in the tangential direction (T) remains within -0.14 to 0.04 mm. From the f-0 distortion curve (wavelength 550 nm), it can be observed that the absolute value of the f-θ distortion rate of the optical imaging lens 50 is less than 4%. From the longitudinal spherical aberration curve, it can be seen that off-axis light rays at three infrared wavelengths-470 nm, 555 nm, and 650 nm-can all converge near the imaging point. The deviation of the imaging point can be controlled within the range of -0.04 to 0.02 mm. As shown in FIG. 5B, the optical imaging lens 50 of this embodiment has effectively corrected various aberrations, meeting the imaging quality requirements of the optical system.

Sixth Embodiment

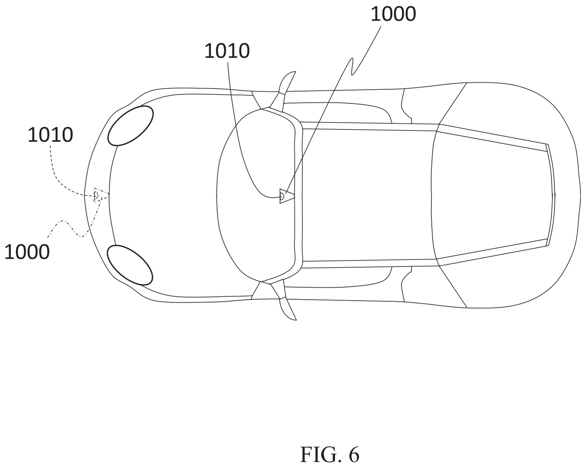

Referring to FIG. 6, an imaging device 1010 comprises an optical imaging lens 10, 20, 30, 40, 50 described in the first to fifth embodiments, and an image sensor 102 , 202 , 302 , 402 , 502; wherein the image sensor 102 , 202 , 302 , 402 , 502 is disposed on an image plane 101 , 201 , 301 , 401 , 501 of the optical imaging lens 10, 20, 30, 40, 50. The image sensor 102 , 202 , 302 , 402 , 502 can be Charge-Coupled Devices (CCD) or Complementary Metal Oxide Semiconductor (CMOS) image sensors.

In FIG. 6, an automotive electronic device 1000 according to the sixth embodiment of the present invention includes an imaging device 1010, wherein the automotive electronic device 1000 is used for observing, monitoring, sensing, and/or recording objects or human behaviors and actions inside and outside the vehicle.

Seventh Embodiment

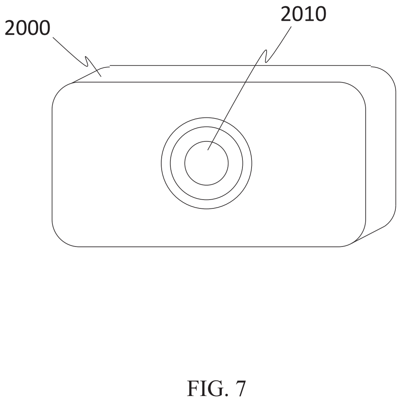

In FIG. 7, the electronic device 2000 according to the seventh embodiment of the present invention includes image device 2010, wherein the electronic device 2000 can be applied to general 3C products and other electronic devices with imaging functions.

Although the present invention has been described with reference to several embodiments, these embodiments are not intended to limit the scope of the invention. For those skilled in the art, various changes in form and details may be made without departing from the spirit and scope of the invention, based on the embodiments disclosed herein. Accordingly, it should be understood that the invention is to be defined by the appended claims, and all variations and modifications within the scope of the claims or their equivalents are intended to be encompassed by the invention.

**Claims**

1. An optical imaging lens, in order from an object side to an image side, comprising:

   a first lens with negative refractive power having an object-side surface being convex and an image-side surface being concave;
   a second lens with positive refractive power having an object-side surface being convex and an image-side surface being convex;
   an aperture stop;
   a third lens with positive refractive power having an object-side surface being concave and an image-side surface being convex;
   a fourth lens with negative refractive power having an object-side surface being concave and an image-side surface being concave;
   a fifth lens with positive refractive power having an object-side surface being convex and an image-side surface being convex; and
   a sixth lens with negative refractive power having an object-side surface being convex and an image-side surface being concave;
   wherein a focal length of the the fourth lens is f4, a focal length of the the fifth lens is f5, a focal length of the the sixth lens is f6, an air gap from the second lens to the third lens is AT23, a focal length of the optical imaging lens is EFL, an air gap from the third lens to the fourth lens is AT34, and the following conditions are satisfied :

$$-9 < (f4+f5+f6)/EFL < -3.4;$$

$$0.03 < AT23/EFL < 0.16;$$

   and

$$0.007 < AT34/EFL < 0.03.$$

2. The optical imaging lens of claim 1, wherein a curvature radius of the object-side surface of the fourth lens is R7, a focal length of the fourth lens is f4, a focal length of the optical imaging lens is EFL, and the following conditions are satisfied:

$$3.3 < R7/f4 < 34;$$

   and

$$-35 < R7/EFL < -3.$$

3. The optical imaging lens of claim 1, wherein a thickness of the second lens is CT2, a thickness of the third lens is CT3, and a thickness of the fourth lens is CT4, an air gap from the second lens to the third lens is AT23, and an air gap from the third lens to the fourth lens is AT34, and the following conditions are satisfied:

$$-15.5<(CT3-CT2)/AT23<-2;$$

and

$$11.0<(CT3+CT4)/AT34<57.0.$$

4. The optical imaging lens of claim 1, wherein a thickness of the first lens is CT1, a thickness of the sixth lens is CT6, and the following condition is satisfied:

$$0.35<CT1/CT6<1.$$

5. The optical imaging lens of claim 1, wherein an air gap from the first lens to the second lens is AT12, and an air gap from the second lens to the third lens is AT23, and the following condition is satisfied:

$$1.9<AT12/AT23<10.5.$$

6. The optical imaging lens of claim 1, wherein a focal length of the the first lens is f1, a focal length of the second lens is f2, a focal length of the fourth lens is f4, a focal length of the fifth lens is f5, a focal length of the optical imaging lens is EFL, and the following conditions are satisfied:

$$0.15<(f1+f2)/EFL<0.7;$$

and

$$0.07<(f4+f5)EFL<0.37.$$

7. The optical imaging lens of claim 1, wherein a total track length of the optical imaging lens is TTL, an air gap from the second lens to the third lens is AT23, an air gap from the third lens to the fourth lens is AT34, and the following conditions are satisfied:

$$25<TTL/AT23<113;$$

And

$$138<TTL/AT34<550.$$

8. The optical imaging lens of claim 1, wherein a total track length of the optical imaging lens is TTL, a thickness of the sixth lens is CT6, and the following condition is satisfied:

$$11<TTL/CT6<24.$$

9. The optical imaging lens of claim 1, wherein a curvature radius of an object-side surface of the the fourth lens is R7, a curvature radius of the image-side of the the fourth lens is R8, a focal length of the fourth lens is f4, and the following condition is satisfied:

$$2<(R7+R8)/f4<34.$$

10. The optical imaging lens of claim 1, wherein a focal length of the first lens is f1, a focal length of the second lens is f2, a thickness of the first lens is CT1, a thickness of the second lens is CT2, a focal length of the fourth lens is f4, and a focal length of the fifth lens is f5, a thickness of the fourth lens is CT4, and a thickness of the fifth lens is CT5; the following conditions are satisfied:

$$0.16<(f1+f2)/(CT1+CT2)<0.9;$$

and

$$0.1<(f4+f5)/(CT4+CT5)<0.5.$$

11. The optical imaging lens of claim 1, wherein the total thickness of the lenses of the optical imaging lens along the optical axis is ΣCT, a thickness of the fourth lens is CT4, the lenses of the optical imaging lens are separated from each other by gaps, and the total width of these gaps at the optical axis is ΣAT, an air gap between the third and fourth lenses is AT34, and the following conditions are satisfied:

$$11<\Sigma CT/CT4<26;$$

and

$$28<\Sigma AT/AT34<125.$$

12. The optical imaging lens of claim 1, wherein a thickness of the fourth lens is CT4, a focal length of the fourth lens is f4, a thickness of the sixth lens is CT6, a focal length of sixth lens is f6, and the following conditions are satisfied:

$$-0.16<CT4/f4<-0.1;$$

and

$$-0.06<CT6/f6<-0.02.$$

13. An imaging device, comprising:

    the optical imaging lens of claim 1; and
    an image sensor; wherein the image sensor is located on an image plane of the optical imaging lens.

14. An electronic device, comprising:
    the imaging device of claim 13.

FIG. 1A

EP 4 769 001 A1

FIG. 1B

FIG. 2A

EP 4 769 001 A1

Field curvature

f-θ Distortion

Longitudinal aberration

HFOV (deg)

HFOV (deg)

S ——— T - - -

470nm
555nm
650nm

-0.20    -0.10    0.00    0.10    0.20
Focus position (mm)

-5%   -3%   -1%   1%   3%   5%
Distortion rate (%)

-0.2   -0.1   0   0.1   0.2
Focus position (mm)

FIG. 2B

30

301
302

38
37
36 ST
35
34
33
32
31

38b
38a
37b
37a
36b
36a
35a
35b
34a 34b
33a 33b
32a
32b
31a
31b

I

FIG 3A

FIG 3B

FIG 4A

EP 4 769 001 A1

Longitudinal aberration

- - 470nm
—— 555nm
······ 650nm

Focus position (mm)

f-θ Distortion

HFOV
(deg)

Distortion rate (%)

Field curvature

—— S    - - - T

HFOV
(deg)

Focus position (mm)

FIG. 4B

FIG. 5A

Field curvature

HFOV
(deg)

—— S ---- T

f-θ Distortion

HFOV
(deg)

Longitudinal aberration

— — 470nm

—— 555nm

······ 650nm

Focus position (mm)

Distortion rate (%)

Focus position (mm)

FIG. 5B

FIG. 6

EP 4 769 001 A1

FIG. 7

Europäisches
Patentamt

European
Patent Office

Office européen
des brevets

## EUROPEAN SEARCH REPORT

**Application Number**

EP 25 21 4271

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2014/247507 A1 (TSAI FEI-HSIN [TW]) 4 September 2014 (2014-09-04) * example 1 * | 1-14 | INV. G02B9/62 G02B13/00 G02B13/04 |
| A | US 10 606 028 B2 (SINTAI OPTICAL SHENZHEN CO LTD [CN]; ASIA OPTICAL CO INC [TW]) 31 March 2020 (2020-03-31) * example 5 * | 1-14 | |
| A | CN 113 985 585 B (JIANGXI LIANCHUANG ELECT CO LTD) 24 May 2022 (2022-05-24) * example 2 * | 1-14 | |
| A | CN 108 614 346 B (SYNERGY INTEGRATION TECH INC) 20 March 2020 (2020-03-20) * example 1 * | 1-14 | |

**TECHNICAL FIELDS SEARCHED (IPC)**

G02B

The present search report has been drawn up for all claims

| Place of search | Date of completion of the search | Examiner |
|---|---|---|
| Munich | 14 April 2026 | Muller, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 4271

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2026

| Patent document cited in search report | | Publication date | Patent family member(s) | | Publication date |
|---|---|---|---|---|---|
| US 2014247507 | A1 | 04-09-2014 | NONE | | |
| US 10606028 | B2 | 31-03-2020 | CN<br>US | 108873245 A<br>2018329177 A1 | 23-11-2018<br>15-11-2018 |
| CN 113985585 | B | 24-05-2022 | NONE | | |
| CN 108614346 | B | 20-03-2020 | NONE | | |

For more details about this annex : see Official Journal of the European Patent Office, No. 12/82